# EUROPÄISCHE PATENTANMELDUNG

(11) **EP 0 827 144 A2**
(43) Veröffentlichungstag der Anmeldung: **04.03.1998**
(21) Anmeldenummer: 97202489.7
(22) Anmeldetag: 12.08.1997
(51) Int. Cl.: G11B 15/00

(54) **Riemenscheibe**

(30) Priorität: 14.08.1996 DE 19632750
(71) Anmelder: Philips Patentverwaltung GmbH, 22335 Hamburg (DE); Philips Electronics N.V., 5621 BA Eindhoven (NL)
(72) Erfinder: Kunze, Norbert, Röntgenstrasse 24, 22335 Hamburg (DE)
(74) Vertreter: von Laue, Hanns-Ulrich, Dipl.-Ing.

(57) **Zusammenfassung**

Die Erfindung bezieht sich auf eine Riemenscheibe (1, 21, 22) für einen Riementrieb, insbesondere auf eine Schwungscheibe für ein Laufwerk eines Magnetbandkassettengerätes, wobei die Riemenscheibe (1, 21, 22) an ihrem Umfangsrand (6, 7) eine Nut (10) aufweist, in der ein Treibriemen (11, 27) zum Antreiben der Riemenscheibe (1, 21, 22) führbar ist.

Um eine derartige Riemenscheibe einfach und kostengünstig herstellen zu können, ist vorgesehen, daß die Riemenscheibe (1, 21, 22) eine Mittelscheibe (2) und eine erste (3) und eine zweite (4) Deckscheibe aufweist, wobei die erste (3) und die zweite (4) Deckscheibe längs ihres Umfanges so geformt sind, daß sie die Nut (10) bilden, in der der Treibriemen (11, 27) führbar ist.

## Beschreibung

Die Erfindung betrifft eine Riemenscheibe, insbesondere eine Schwungscheibe für ein Laufwerk eines Magnetbandkassettengerätes, wobei die Riemenscheibe an ihrem Umfangsrand eine Nut aufweist, in der ein Treibriemen zum Antreiben der Riemenscheibe führbar ist.

Derartige Riemenscheiben werden beispielsweise als Schwungscheiben in vielen Laufwerken von Magnetbandkassettengeräten eingesetzt. Die Welle der Riemenscheibe ist dabei üblicherweise zugleich die Tonwelle, mittels der das Magnetband mit definierter Geschwindigkeit von dem Abrollwickel zum Aufrollwickel am Tonkopf vorbeigeführt wird.

Eine derartige Riemenscheibe ist aus der DE 43 22 751 A1 bekannt. Diese bekannte Riemenscheibe besteht aus zwei Einzelscheiben, die jede für sich längs ihres Umfanges mit einer schrägen Prägung versehen sind, wobei zwei spiegelbildlich zusammengefügte Einzelscheiben mit ihren schrägen Prägungen die Umfangsnut für den Treibriemen bilden. Die Umfangsnut für den Treibriemen darf nicht rosten, da dies zu einer Verschmutzung des Treibriemens und zu Gleichlaufschwankungen führen würde. Daher müssen bei dieser bekannten Riemenscheibe die Einzelscheiben aus rostfreiem Material bestehen, wobei üblicherweise rostfreier Stahl verwendet wird. Bei der Herstellung der Riemenscheibe müssen die beiden Einzelscheiben genau zentrisch miteinander verbunden werden. Ungenauigkeiten bei dem zentrischen Verbinden der beiden Einzelscheiben bewirken mittels der die Nut bildenden schrägen Prägungen unmittelbar eine unsymmetrische Ausgestaltung der Nut, wodurch die Nut eine radiale und axiale Unwucht erhält.

Es ist Aufgabe der Erfindung, eine Riemenscheibe der eingangs genannten Art zu schaffen, die kostengünstig und einfach herstellbar ist.

Diese Aufgabe ist erfindungsgemäß dadurch gelöst, daß die Riemenscheibe eine Mittelscheibe und eine erste und eine zweite Deckscheibe aufweist, wobei die erste und die zweite Deckscheibe längs ihres Umfanges so geformt sind, daß sie die Nut bilden, in der der Treibriemen führbar ist.

Bei einer derartigen Riemenscheibe wird die Nut von den geeignet geformten Umfangsrändern der ersten und der zweiten Deckscheibe gebildet, während die Mittelscheibe als Träger für die Deckscheiben fungiert.

Bei einer bevorzugten Ausgestaltung der Erfindung ist vorgesehen, daß die Mittelscheibe aus einem ersten Material, insbesondere einem einfachen Stahl, an den keine Forderung nach Rostfreiheit gestellt ist, besteht und daß die erste und die zweite Deckscheibe aus einem zweiten nichtrostenden Material, insbesondere einem Edelstahl, bestehen.

Für eine einwandfreie Funktionsweise der Riemenscheibe ist es erforderlich, daß die Nut, in der die Treibriemen zum Antreiben der Riemenscheibe geführt wird, nichtrostend ausgebildet ist. Bei der erfindungsgemäß ausgebildeten Riemenscheibe ist es möglich, die Mittelscheibe aus einem beliebigen Material, insbesondere einem rostenden Stahl wie z.B. St 37, auszubilden, ohne daß dies Auswirkungen auf die Funktionsfähigkeit der Nut hat. Die erste und die zweite Deckscheibe, die längs ihres Umfanges die die Treibriemen führende Nut bilden, bestehen vorzugsweise aus einem zweiten nichtrostenden Material, insbesondere Edelstahl, und gewährleisten damit, daß die Nut nicht rosten kann. Nichtrostendes Material bzw. nichtrostender Stahl sind in der Regel bedeutend teurer als rostende Materialien bzw. Stähle. Dadurch, daß bei der vorteilhaften Ausgestaltung der erfindungsgemäßen Riemenscheibe nicht die gesamte Riemenscheibe aus einem nichtrostenden Material, sondern nur die erste und die zweite Deckscheibe aus einem nichtrostenden Material gefertigt werden müssen, läßt sich eine bedeutende Kostenreduzierung erzielen. Diese Kostenersparnis ist insbesondere dann groß, wenn nach einer weiteren vorteilhaften Ausgestaltung der Erfindung die Höhe der ersten und der zweiten Deckscheibe kleiner als die Höhe der Mittelscheibe ist.

Werden dementsprechend die erste und die zweite Deckscheibe sehr dünn ausgebildet und die Mittelscheibe entsprechend dicker, so besteht die Riemenscheibe aus einem relativ geringen Anteil des hochwertigen, nichtrostenden Materials und aus einem relativ großen Anteil des billigeren, rostenden Materials. Dies führt zu einer bedeutenden Kostenersparnis.
Die Schwungmasse der Riemenscheibe wird dann im wesentlichen von der Mittelscheibe aufgebracht, während die erste und die zweite Deckscheibe im wesentlichen die Funktion haben, die die Treibriemen führende Nut zu bilden.

Nach einer weiteren vorteilhaften Ausgestaltung der Erfindung ist vorgesehen, daß die Mittelscheibe mit der ersten und der zweiten Deckscheibe verklebt, verschweißt, verlötet oder vernietet ist.

Die Art der Scheibenverbindung ist jedoch nicht auf diese Möglichkeiten begrenzt. Im allgemeinen ist jegliche Art der Scheibenverbindung möglich, die während der Lebensdauer der Riemenscheibe haftbeständig bleibt.

Nach einer weiteren vorteilhaften Ausgestaltung der Erfindung ist vorgesehen, daß die erste und die zweite Deckscheibe an ihrem Umfangsrand V-förmig ausgebildet sind, wobei die Spitzen der V-förmigen Umfangsränder aufeinander zu gerichtet sind und im wesentlichen aneinanderliegen.

Eine V-förmige Ausbildung des Umfangsrandes und damit auch eine V-förmige Ausbildung der Nut ist fertigungstechnisch besonders günstig zu realisieren.

Es sind jedoch durch entsprechend andersartige Ausgestaltungen des Umfangsrandes der ersten und der zweiten Deckscheibe auch andere Nutformen, z.B. runde Nuten, realisierbar.

Die erfindungsgemäße Riemenscheibe läßt sich vorteilhaft mittels eines Verfahrens herstellen, welches dadurch gekennzeichnet ist, daß in einem ersten Verfahrensschritt die Mittelscheibe mittels eines Verbindungsprozesses mit der ersten und der zweiten Deckscheibe verbunden wird und daß danach in einem zweiten Verfahrensschritt die Deckscheiben längs ihres Umfanges mittels eines Verformungsprozesses derart verformt werden, daß sie die Nut für die Führung des Treibriemens bilden.

Mittels eines derartigen Verfahrens läßt sich die Riemenscheibe sehr kostengünstig und mit einer hohen Genauigkeit der Nut fertigen. Toleranzen, die bei der Verbindung der Mittelscheibe mit der ersten und der zweiten Deckscheibe hinsichtlich der zentrischen Ausrichtung von Mittelscheibe sowie erster und zweiter Deckscheibe entstehen, haben keinen bzw. keinen unmittelbaren Einfluß auf die exakte Ausbildung der Nut. Erst wenn die erste und die zweite Deckscheibe fest mit der Mittelscheibe verbunden sind, werden die Deckscheiben längs ihres Umfanges mittels des Verformungsprozesses verformt, so daß die Genauigkeit der Ausbildung der Nut nur von der exakten Ausführung des Verformungsprozesses abhängt, aber nicht von dem Verbindungsprozeß.

Der Verformungsprozeß läßt sich vorteilhaft mittels eines Prägeprozesses realisieren.

Der Verbindungsprozeß läßt sich vorteilhaft mittels eines Klebe-, Schweiß-, Löt- oder Nietprozesses realisieren.

Eine weitere vorteilhafte Ausgestaltung des Verfahrens ist dadurch gekennzeichnet, daß ein Mittelloch der Riemenscheibe im gleichen Werkzeugtakt wie der Verformungsprozeß hergestellt wird.

Ein solches Mittelloch wird für die Welle der Riemenscheibe benötigt, welche bei Schwungscheiben von Magnetbandkassettengeräten üblicherweise zugleich die Tonwelle darstellt. Diese Welle kann in das Mittelloch z.B. eingepreßt, eingeklebt oder eingeschweißt werden. Die Herstellung des Mittelloches kann z.B. mittels eines Stanzprozesses erfolgen. Wird dieser Stanzprozeß gleichzeitig mit dem Verformungsprozeß durchgeführt, so lassen sich damit die Fertigungszeit und die Fertigungskosten reduzieren. Zudem wird eine hohe Koaxialität von dem Mittelloch und der umlaufenden Nut erreicht. Dies ist besonders bei Schwungscheiben von Magnetbandkassettengeräten wichtig, um eine hohe Gleichlaufgenauigkeit zu erzielen.

Die erfindungsgemäße Riemenscheibe ist vorzugsweise als Schwungscheibe in einem Laufwerk bzw. einem Magnetbandkassettengerät mit einem Laufwerk einsetzbar.

Ein Ausführungsbeispiel der Erfindung wird nachfolgend anhand der Zeichnung in den Fig. 1 bis 5 näher erläutert. Es zeigen:
Fig. 1 eine Schwungscheibe für ein Laufwerk eines Magnetbandkassettengerätes mit einer Mittelscheibe und einer ersten und einer zweiten Deckscheibe sowie einer von der ersten und der zweiten Deckscheibe geformten Nut,
Fig. 2 die Schwungscheibe in einem Zwischenstadium eines Verfahrens der Fertigung, wobei die Mittelscheibe mit der ersten und der zweiten Deckscheibe verbunden ist, die Deckscheiben jedoch noch nicht längs ihres Umfanges verformt sind,
Fig. 3 die Schwungscheibe gemäß Fig. 2, wobei eine Prägematrize zwischen die erste und die zweite Deckscheibe gefahren worden ist und zwei Prägestempel dargestellt sind, die jedoch noch nicht auf die Deckscheiben einwirken,
Fig. 4 die Schwungscheibe gemäß Fig. 3, wobei die beiden Prägestempel auf die Deckscheiben zugefahren sind und die Deckscheiben längs ihres Umfanges derart verformt worden sind, daß sie die Nut bilden,
Fig. 5 Teile eines Magnetbandkassettengerätes mit zwei Schwungscheiben, deren Welle zugleich die Tonwelle darstellt, einem die Schwungscheiben antreibenden Treibriemen und einem den Treibriemen antreibenden Motor.

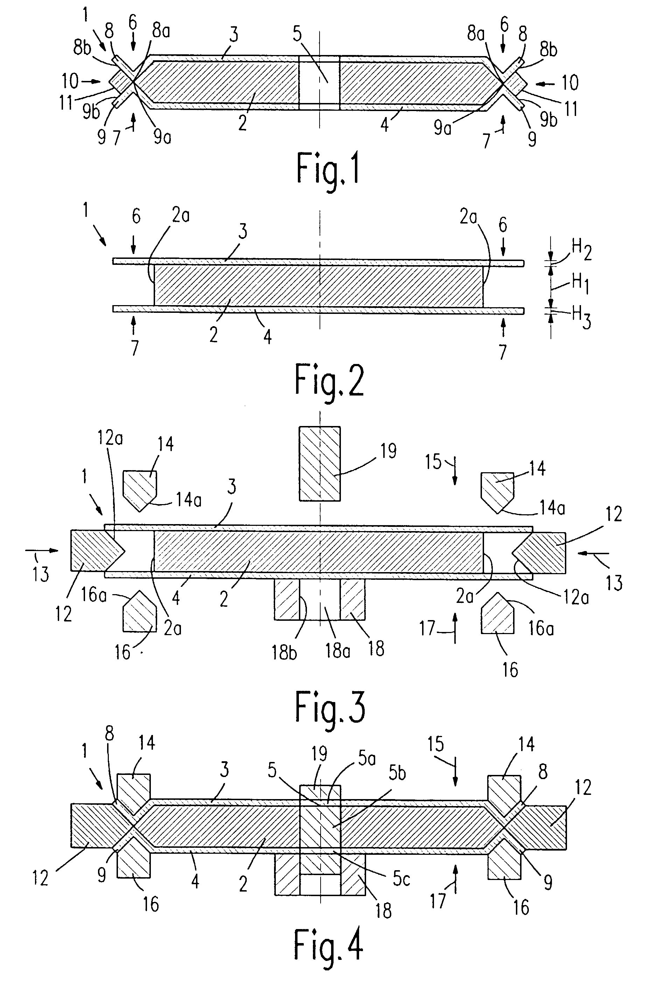

Fig. 1 zeigt im Schnitt als Riemenscheibe eine Schwungscheibe 1 für das Laufwerk eines Magnetbandkassettengerätes. Die Schwungscheibe 1 weist eine Mittelscheibe 2 sowie eine erste Deckscheibe 3 und eine zweite Deckscheibe 4 auf. Die Mittelscheibe 2 besteht vorzugsweise aus einem billigen, rostenden Material, insbesondere einem rostenden Stahl, wie z.B. ST37, und weist eine Außenkante 2a auf. Die erste und die zweite Deckscheibe bestehen aus einem nichtrostenden Material, insbesondere einem Edelstahl, wie z.B. ST4310. Die Schwungscheibe 1 weist ein Mittelloch 5 auf, in das eine nicht dargestellte Schwungscheibenwelle eingepreßt, eingeklebt oder eingeschweißt werden kann. Diese nicht dargestellte Schwungscheibenwelle wird in der Regel gleich der Tonwelle des Magnetbandkassettengerätes sein. Die Mittelscheibe 2 ist mit der ersten Deckscheibe 3 und der zweiten Deckscheibe 4 unverrückbar verbunden. Hierfür sind die verschiedensten Verbindungsarten möglich, insbesondere Schweißverbindungen, Nietverbindungen, Lötverbindungen oder Klebeverbindungen. Die Umfangsränder 6 bzw. 7 der ersten Deckscheibe 3 bzw. der zweiten Deckscheibe 4 sind als erster V-förmiger Abschnitt 8 bzw. als zweiter V-förmiger Abschnitt 9 spiegelbildlich zueinander ausgebildet. Die Spitzen 8a bzw. 9a des ersten V-förmigen Abschnitts 8 bzw. des zweiten V-förmigen Abschnitts 9 liegen aneinander an. Der erste V-förmige Abschnitt 8 bzw. der zweite V-förmige Abschnitt 9 weisen nach außen liegende Flanken 8b bzw. 9b auf. Diese Flanken 8b bzw. 9b bilden eine Nut 10 für einen Treibriemen 11.

Ein Beispiel für ein Verfahren zur Herstellung der Schwungscheibe 1 gemäß Fig. 1 wird nachfolgend anhand der Fig. 2 bis 4 näher erläutert.

Dabei werden für gleiche Elemente jeweils die gleichen Bezugsziffern verwendet. Fig. 2 zeigt die Schwungscheibe 1 in einem ersten Zwischenstadium des Fertigungsprozesses. Die Mittelscheibe 2 ist mit der ersten Deckscheibe 3 und der zweiten Deckscheibe 4 mittels einer Schweiß-, Niet-, Löt- oder Klebeverbindung verbunden. Die erste Deckscheibe 3 und die zweite Deckscheibe 4 ragen im Bereich ihrer Umfangsränder 6 bzw. 7 über die Außenkante 2a der Mittelscheibe 2 hinaus. Die axiale Höhe H₁ der Mittelscheibe 2 ist deutlich größer als die axialen Höhen H₂ und H₃ der Deckscheiben 3 und 4.

Fig. 3 zeigt die Schwungscheibe 1 gemäß Fig. 2, wobei in Richtung eines Pfeiles 13 ein Prägematrize 12 mit einer V-förmigen Spitze 12a in Richtung auf die Außenkante 2a der Mittelscheibe 2 bewegt worden ist. Die V-förmige Spitze 12a der Prägematrize 12 wird dabei von den Umfangsrändern 6 bzw. 7 der ersten Deckplatte 3 bzw. der zweiten Deckplatte 4 überdeckt. Es ist ein erster Prägestempel 14 mit einer V-förmigen Spitze 14a vorgesehen, der in Richtung eines Pfeiles 15 auf die erste Deckscheibe 3 zubewegbar ist. Ferner ist ein zweiter Prägestempel 16 mit einer V-förmigen Spitze 16a versehen, der in Richtung eines Pfeiles 17 in entgegengesetzter Richtung auf die zweite Deckscheibe 4 zubewegbar ist.

Es ist eine Stanzmatrize 18 vorgesehen, die ein kreisförmiges Matrizenloch 18a mit Matrizenlochwänden 18b aufweist. Es ist ein Stanzstempel 19 vorgesehen, der in Richtung des Pfeiles 15 auf die Schwungscheibe 1 zubewegbar ist.

Fig. 4 zeigt die Schwungscheibe gemäß Fig. 3, wobei der erste Prägestempel 14 in Richtung des Pfeiles 15 und der zweite Prägestempel 16 in Richtung des Pfeiles 17 auf die Schwungscheibe 1 zubewegt worden sind. Dabei haben der erste Prägestempel 14 und der zweite Prägestempel 16 auf die Umfangsränder 6 bzw. 7 der ersten Deckscheibe 3 bzw. der zweiten Deckscheibe 4 im Zusammenspiel mit der Prägematrize 12 derart eingewirkt, daß die Umfangsränder 6 bzw. 7 der ersten Deckscheibe 3 bzw. der zweiten Deckscheibe 4 als erster V-förmiger Abschnitt 8 bzw. als zweiter V-förmiger Abschnitt 9 geprägt worden sind. Gleichzeitig mit dem ersten Prägestempel 14 und dem zweiten Prägestempel 16 ist auch der Stanzstempel 19 in Richtung des Pfeiles 15 auf die Schwungscheibe 1 zubewegt worden, wodurch in die erste Deckscheibe 3 ein Mittelloch 5a, in die Mittelscheibe 2 ein Mittelloch 5b und in die zweite Deckscheibe 4 ein Mittelloch 5c eingestanzt worden ist. Dadurch ist ein durchgehendes Mittelloch 5 in der Schwungscheibe 1 gebildet worden.

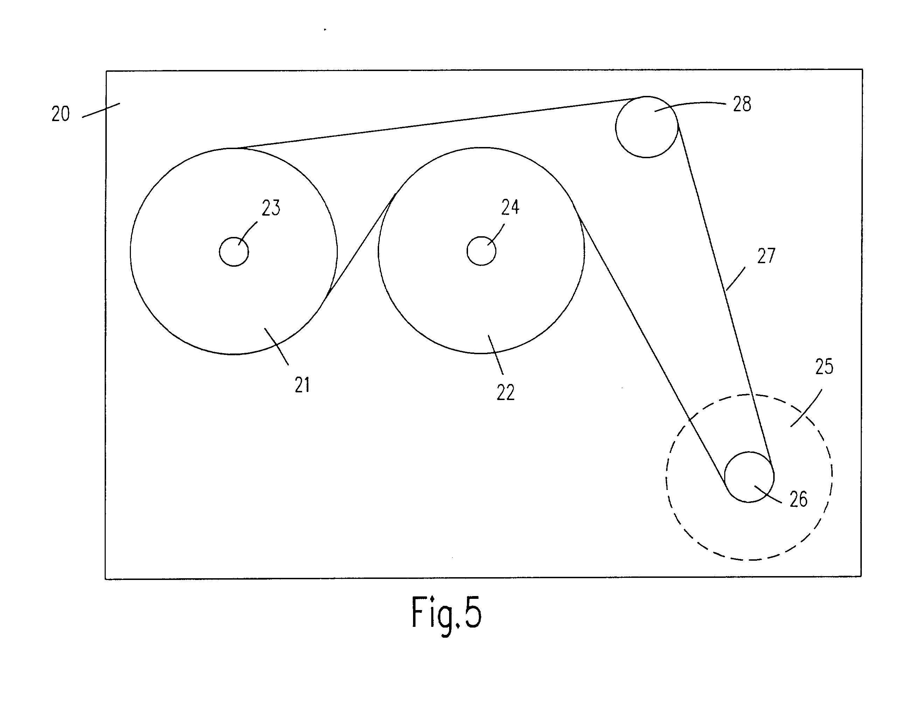

Fig. 5 zeigt Teile eines Laufwerkes eines Magnetbandkassettengerätes. An einer Chassisplatte 20 sind eine erste Schwungscheibe 21 und eine zweite Schwungscheibe 22 angeordnet. In der Mitte der ersten Schwungscheibe 21 bzw. der zweiten Schwungscheibe 22 sind eine erste Tonwelle 23 bzw. eine zweite Tonwelle 24 befestigt. Die erste Tonwelle 23 und die zweite Tonwelle 24 und damit auch die erste Schwungscheibe 21 und die zweite Schwungscheibe 22 sind an der Chassisplatte 20 drehbar angelagert. Es ist ein Tonwellenmotor 25 vorgesehen, der ein Antriebsrad 26 aufweist. Um die erste Schwungscheibe 21 und die zweite Schwungscheibe 22 ist S-förmig ein Treibriemen 27 gewickelt, der ferner um das Antriebsrad 26 sowie über ein Umlenkrolle 28 geführt ist. Damit sind mittels des Tonwellenmotors 25 und des Treibriemens 27 die Schwungscheiben 21 und 22 antreibbar.

## Patentansprüche

1. Riemenscheibe (1, 21, 22) für einen Riementrieb, insbesondere Schwungscheibe für ein Laufwerk eines Magnetbandkassettengerätes, wobei die Riemenscheibe (1, 21, 22) an ihrem Umfangsrand (6, 7) eine Nut (10) aufweist, in der ein Treibriemen (11, 27) zum Antreiben der Riemenscheibe (1, 21, 22) führbar ist, dadurch gekennzeichnet,
daß die Riemenscheibe (1, 21, 22) eine Mittelscheibe (2) und eine erste (3) und eine zweite (4) Deckscheibe aufweist, wobei die erste (3) und die zweite (4) Deckscheibe längs ihres Umfanges so geformt sind, daß sie die Nut (10) bilden, in der der Treibriemen (11, 27) führbar ist.

2. Riemenscheibe nach Anspruch 1, dadurch gekennzeichnet,
daß die Mittelscheibe (2) aus einem ersten Material, insbesondere einem einfachen Stahl, an den keine Forderung nach Rostfreiheit gestellt ist, besteht, und daß die erste (3) und die zweite (4) Deckscheibe aus einem zweiten nichtrostenden Material, insbesondere einem Edelstahl, bestehen.

3. Riemenscheibe nach Anspruch 1 oder 2, dadurch gekennzeichnet,
daß die Höhe (H₂, H₃) der ersten (3) und der zweiten (4) Deckscheibe kleiner als die Höhe (H₁) der Mittelscheibe (2) ist.

4. Riemenscheibe nach einem der Ansprüche 1 bis 3, dadurch gekennzeichnet, daß die erste (3) und die zweite (4) Deckscheibe an ihrem Umfangsrand (6, 7) V-förmig ausgebildet sind, wobei die Spitzen (8a, 9a) der V-förmig ausgebildeten Umfangsränder (8, 9) aufeinander zugerichtet sind und im wesentlichn aneinanderliegen.

5. Riemenscheibe nach einem der Ansprüche 1 bis 4, dadurch gekennzeichnet, daß die Mittelscheibe (2) mit der ersten (3) und der zweiten (4) Deckscheibe verklebt, verschweißt, verlötet oder vernietet ist.

6. Verfahren zur Herstellung einer Riemenscheibe nach einem der Ansprüche 1 bis 5, dadurch gekennzeichnet,
daß in einem ersten Verfahrensschritt die Mittelscheibe (2) mittels eines Verbindungsprozesses mit der ersten (3) und der zweiten (4) Deckscheibe verbunden wird und daß danach in einem zweiten Verfahrensschritt die Deckscheiben (3, 4) längs ihres Umfanges mittels eines Verformungsprozesses derart verformt werden, daß sie die Nut (10) für die Führung des Treibriemens (11, 27) bilden.

7. Verfahren nach Anspruch 6, dadurch gekennzeichnet,
daß der Verformungsprozeß mittels eines Prägeprozesses realisiert wird.

8. Verfahren nach Anspruch 6 oder 7, dadurch gekennzeichnet,
daß der Verbindungsprozess ein Klebe-, Schweiß-, Löt- oder Nietprozeß ist.

9. Verfahren nach einem der Ansprüche 6 bis 8, dadurch gekennzeichnet, daß ein Mittelloch (5) der Riemenscheibe (1, 21, 22) im gleichen Werkzeugtakt wie der Verformungsprozeß hergestellt wird.

10. Laufwerk mit einer Riemenscheibe nach einem der Ansprüche 1 bis 9.

11. Magnetbandkassettengerät mit einer Riemenscheibe nach einem der Ansprüche 1 bis 9.
